(19) Europäisches Patentamt
European Patent Office
Office européen des brevets

(11) EP 0 728 813 B1

(12) EUROPÄISCHE PATENTSCHRIFT

(45) Veröffentlichungstag und Bekanntmachung des Hinweises auf die Patenterteilung:
**03.12.1997 Patentblatt 1997/49**

(51) Int Cl.[6]: **C08L 83/08**, C09D 183/08, D06M 15/643

(21) Anmeldenummer: **96102663.0**

(22) Anmeldetag: **22.02.1996**

(54) **Optische klare Aminosiliconzusammensetzungen**

Optically clear aminosilicone compositions

Compositions d'aminosilicone optiquement claires

(84) Benannte Vertragsstaaten:
**DE FR GB**

(30) Priorität: **23.02.1995 DE 19506396**

(43) Veröffentlichungstag der Anmeldung:
**28.08.1996 Patentblatt 1996/35**

(73) Patentinhaber: **Wacker-Chemie GmbH**
**81737 München (DE)**

(72) Erfinder:
- **Lautenschlager, Hans-Jürgen, Dr.**
**84533 Haiming (DE)**
- **Mahr, Günter, Dr.**
**84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 536 765** **DE-A- 4 306 796**
**US-A- 4 399 247** **US-A- 5 258 451**

EP 0 728 813 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft optisch klare Zusammensetzungen auf Basis von Aminoalkylgruppen aufweisendem Organopolysiloxan, Wasser und Alkanol und Lösungsvermittler und deren Herstellung.

Aminoalkylgruppen aufweisende Organopolysiloxane werden in großer Menge beispielsweise als Textilausrüstungsmittel, in der Kosmetik und als Trennmittel eingesetzt.

Aus GB-A-20 36 052 ist bekannt, daß Aminoalkylgruppen aufweisende Organopolysiloxane beim Vermischen von endständige Silanolgruppen enthaltendem Polydimethylsiloxan und Aminoalkylgruppen aufweisendem Alkoxysilan bei Raumtemperatur entstehen. Das derart hergestellte Aminoalkylgruppen aufweisende Organopolysiloxan ist jedoch trübe, da als Kondensationsprodukt entstehendes Alkanol und gegebenenfalls Wasser schlecht im Organopolysiloxan löslich sind. Bei der Lagerung entsteht bei langsam ablaufenden Kondensationsreaktionen, bei denen die Siloxanketten verlängert werden, weiteres Alkanol und Wasser und schließlich scheidet sich eine Alkanol/Wasser-Phase ab. Eine genaue Dosierung des Aminoalkylgruppen aufweisenden Organopolysiloxans ist nach Auftrennung der Phasen oder deren Emulgieren möglich.

Die Abscheidung von Alkanol und Wasser läßt sich vermeiden, wenn man bei der Herstellung erhitzt, um die Umsetzung zu vervollständigen und gleichzeitig das Alkanol und Wasser austreibt. In G. Helary and G. Sauvet; heterofunctional condensation of alkoxysilanes and silanols; Eur. Polym. J. Vol. 28, No. 1 Seiten 37 bis 41, 1991 ist die Entfernung des bei der Umsetzung von Silanolen mit Aminoalkylgruppen aufweisendem Methoxysilan entstehenden Methanols im Vakuum beschrieben.

Der vorliegenden Erfindung liegt die Aufgabe zugrunde, Zusammensetzungen auf Basis von Aminoalkylgruppen aufweisendem Organopolysiloxan auf möglichst wenig aufwendige Weise bereitzustellen, bei denen weder Trübungen bei der Lagerung auftreten und Aminoalkylgruppen aufweisendes Organopolysiloxan leicht dosiert werden kann.

Die Erfindung betrifft optisch klare Zusammensetzungen enthaltend

(A) Organopolysiloxan, das mindestens einen einwertigen SiC-gebundenen Rest mit primären, sekundären und/ oder tertiären Aminogruppen aufweist,
(B) 0,01 bis 1 Gewichtsteile pro 100 Gewichtsteile Organopolysiloxan (A) Verbindungen, die ausgewählt werden aus Wasser, Methanol und Ethanol und
(C) 0,05 bis 20 Gewichtsteile Lösungsvermittler pro 100 Gewichtsteile Organopolysiloxan (A), der ausgewählt wird aus

(C1) $C_1$- bis $C_{19}$-Carbonsäure-$C_1$- bis $C_{12}$-Alkylestern und -Glykolestern,
(C2) $C_3$- bis $C_{20}$-Alkanolen und $C_3$- bis $C_{20}$-Alkanol-$C_1$-bis $C_{12}$-Alkoxylaten und
(C3) Glycosidreste aufweisenden Organosiliciumverbindungen.

Für die meisten Anwendungen wird die optisch klaren Zusammensetzung zu einer wässrigen Emulsion verarbeitet. Die Lösungsvermittler wirken sich beim Emulgieren nicht störend aus und erfüllen zum Teil sogar die Funktion eines Emulgators oder Emulgierhilfsstoffs. Als Lösungsvermittler kann eine einzige Verbindung eingesetzt werden, es können auch Gemische verschiedener Lösungsvermittler eingesetzt werden.

In der Regel sind in den optisch klaren Zusammensetzungen höchstens 0,5 Gewichtsteile pro 100 Gewichtsteile Organopolysiloxan (A) Verbindungen (B), die ausgewählt werden aus Wasser, Methanol und Ethanol vorhanden.

Vorzugsweise weist in der Zusammensetzung das Organopolysiloxan (A) mindestens eine Siloxaneinheit der allgemeinen Formel (I)

$$R^1_a Q_b SiO_{\frac{(4-a-b)}{2}} \qquad (I)$$

auf, und alle anderen Siloxaneinheiten weisen die allgemeine Formel (II) auf

$$R^1_c SiO_{\frac{(4-c)}{2}}, \qquad (II)$$

wobei

**$R^1$** gleiche oder verschiedene, einwertige, gegebenenfalls Fluor-, Chlor- oder Brom- substituierte $C_1$- bis $C_{18}$-Kohlenwasserstoffreste, Wasserstoffatome, $C_1$- bis $C_{12}$-Alkoxy- oder Hydroxyreste oder Alkylglykolreste bedeutet,

**Q** eine Gruppe der allgemeinen Formel (III)

$$-R^2-[NR^3(CH_2)_m]_dN(R^3)_2 \qquad \text{(III)}$$

bedeutet, wobei

**$R^2$** einen zweiwertigen $C_1$- bis $C_{18}$-Kohlenwasserstoffrest bedeutet,
**$R^3$** ein Wasserstoffatom oder einen gegebenenfalls Fluor-, Chlor- oder Brom- oder $C_1$- bis $C_5$-Alkoxysubstituierten $C_1$- bis $C_{18}$-Kohlenwasserstoffrest bedeutet,
**a** die Werte 0, 1 oder 2,
**b** die Werte 1, 2 oder 3,
**c** die Werte 0, 1, 2 oder 3,
**d** die Werte 0, 1, 2, 3 oder 4 und
**m** die Werte 2, 3, 4, 5 oder 6 aufweisen und die Summe aus a und b maximal 4 beträgt.

Die $C_3$- bis $C_{12}$-Alkoxyreste **$R^1$** sind so wenig reaktiv, daß die daraus durch Kondensation mit Silanolgruppen oder Hydrolyse mit Wasser entstehenden $C_3$- bis $C_{12}$-Alkanole nur in sehr geringer Menge anfallen können. Ferner lösen sich diese Alkanole leicht im (A) Organopolysiloxan und sind selbst Lösungsvermittler (C1).

Beispiele für $C_1$- bis $C_{18}$-Kohlenwasserstoffreste sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexyl-rest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der $\alpha$- und der $\beta$-Phenylethylrest.

Die vorstehenden Kohlenwasserstoffreste **$R^1$** enthalten gegebenenfalls eine aliphatische Doppelbindung. Beispiele sind Alkenylreste, wie der Vinyl-, Allyl-, 5-Hexen-1-yl-, E-4-Hexen-1-yl-, Z-4-Hexen-1-yl-, 2-(3-Cyclohexenyl)-ethyl- und Cyclododeca-4,8-dienylrest. Bevorzugte Reste **$R^1$** mit aliphatischer Doppelbindung sind der Vinyl-, Allyl-, und 5-Hexen-1-ylrest.

Vorzugsweise enthalten jedoch höchstens 1 % der Kohlenwasserstoffreste **$R^1$** eine Doppelbindung.

Beispiele für mit Fluor-, Chlor- oder Bromatomen substituierte $C_1$- bis $C_{18}$-Kohlenwasserstoffreste sind der 3,3,3-Trifluor-n-propylrest, der 2,2,2,2',2',2'-Hexafluorisopropylrest, der Heptafluorisopropylrest, und der o-, m-, und p-Chlorphenylrest.

Beispiele für die zweiwertigen $C_1$- bis $C_{18}$-Kohlenwasserstoffreste **$R^2$** sind gesättigte gerad- oder verzweigtkettige oder cyclische Alkylenreste wie der Methylen- und Ethylenrest sowie Propylen-, Butylen-, Pentylen-, Hexylen-, 2-Methylpropylen-, Cyclohexylen- und Octadecylenreste oder ungesättigte Alkylen- oder Arylenreste wie der Hexenylenrest und Phenylenreste, wobei der n-Propylenrest und der 2-Methylpropylenrest besonders bevorzugt ist.

Die Alkoxyreste sind über ein Sauerstoffatom gebundene, vorstehend beschriebene Alkylreste. Die Beispiele für Alkylreste gelten im vollen Umfang auch für die Alkoxyreste **$R^1$**.

Die Alkylglykolreste **$R^1$** weisen vorzugsweise die allgemeine Formel (IV)

$$-R^2-[O(CHR^3)_d]_nOR^4 \qquad \text{(IV)}$$

auf, in der **$R^2$, $R^3$** und d die vorstehenden Bedeutungen haben, **n** den Wert 1 bis 100 hat und bein Wasserstoffatom, einen

Rest **$R^3$** oder eine Gruppe der allgemeinen Formel

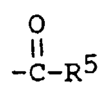

bedeutet, wobei **$R^5$** den Rest **$R^3$** oder O-$R^3$ bedeutet.

In den vorstehenden allgemeinen Formeln (I) bis (IV) bedeuten vorzugsweise

**$R^1$** einen Methyl-, Phenyl-, $C_1$- bis $C_3$-Alkoxy- oder Hydroxyrest oder einen Rest der allgemeinen Formel (IV),
**$R^2$** einen zweiwertigen $C_2$- bis $C_6$-Kohlenwasserstoffrest,
**$R^3$** ein Wasserstoffatom oder einen Methylrest,
**a** die Werte 0 oder 1,
**b** den Wert 1,
**c** die Werte 2 oder 3 und
**d** den Wert 1.

Besonders bevorzugt sind lineare Polydimethylsiloxane, die gegebenenfalls $C_1$- bis $C_3$-Alkoxy- oder Hydroxyendgruppen aufweisen. Vorzugsweise bedeutet bei diesen Polymethylsiloxanen Q eine Gruppe $H_2N(CH_2)_2NH(CH_2)_3$- oder $H_2N(CH_2)_2NHCH_2CH(CH_3)CH_2$-.

Vorzugsweise beträgt das Verhältnis der Siloxaneinheiten der allgemeinen Formel (I) zu den Siloxaneinheiten der allgemeinen Formel (II) 1 : 10 bis 30 000, insbesondere 1 : 20 bis 300. Die Amingehalte betragen vorzugsweise 0,01 bis 2 mequiv/g, insbesondere 0,1 bis 0,7 mequiv/g, gemessen als Verbrauch an In Salzsäure in ml/g Organopolysiloxan (A) bei der Titration bis zum Neutralpunkt.

Es kann eine Art von Organopolysiloxan (A) eingesetzt werden. Es kann aber auch ein Gemisch aus mindestens zwei verschiedenen Arten von Organopolysiloxan (A) eingesetzt werden.

Das Organopolysiloxan (A) oder ein Gemisch aus mindestens zwei verschiedenen Arten von Organopolysiloxanen (A) hat vorzugsweise eine durchschnittliche Viskosität von 20 bis 100000 mPa·s, insbesondere 20 bis 10000 mPa·s bei 25°C.

Vorzugsweise enthält die Zusammensetzung 0,1 bis 10 Gewichtsteile, insbesondere 0,5 bis 3 Gewichtsteile Lösungsvermittler (C) pro 100 Gewichtsteile Organopolysiloxan (A).

Die Organopolysiloxane (A) werden aus

(E) Verbindungen, die ausgewählt werden aus

(E1) Organosilanen, welche mindestens einen einwertigen SiC-gebundenen Rest mit primären, sekundären und/oder tertiären Aminogruppen und mindestens eine $C_1$- bis $C_4$-Alkoxygruppe aufweisen und
(E2) Organopolysiloxanen, welche mindestens einen einwertigen SiC- gebundenen Rest mit primären, sekundären und/oder tertiären Aminogruppen und mindestens eine $C_1$- bis $C_4$-Alkoxy- und/oder Silanolgruppe aufweisen und

(F) Verbindungen, die ausgewählt werden aus

(F1) Organosilanen welche mindestens eine $C_1$- bis $C_4$-Alkoxygruppe aufweisen und
(F2) Organopolysiloxanen, welche mindestens eine $C_1$- bis $C_4$-Alkoxy- und/oder Silanolgruppe aufweisen,

hergestellt.

Vorzugsweise weisen die Organosilane (E1) die allgemeine Formel (V)

$$Q_eR^6{}_fSiR^1{}_{(4-e-f)} \qquad (V)$$

auf, in der

**$R^6$** einen $C_1$- oder $C_2$-Alkoxyrest,
**e** die Werte 1, 2 oder 3,
**f** die Werte 1, 2 oder 3 bedeuten und mit der Maßgabe, daß die Summe aus **e** und **f** maximal 4 beträgt und
**Q** und **$R^1$** die vorstehenden Bedeutungen aufweisen.

Vorzugsweise weisen die Organopolysiloxane (E2) mindestens eine Siloxaneinheit der vorstehenden allgemeinen Formel (I) und mindestens eine Siloxaneinheit der allgemeinen Formel (VI)

$$R^1{}_gR^6{}_hHO_iSiO_{\frac{(4-g-h)}{2}} \qquad (VI)$$

auf, und alle anderen Siloxaneinheiten weisen die vorstehende allgemeine Formel (II) auf
wobei

**g** die Werte 0, 1 oder 2,
**h** die Werte 1, 2 oder 3 und
**i** die Werte 0 oder 1 bedeuten, mit der Maßgabe, daß die Summe aus **g, h** und **i** maximal 3 beträgt und
**Q**, $\mathbf{R^1}$ und $\mathbf{R^6}$ die vorstehenden Bedeutungen aufweisen.

Vorzugsweise weisen die Organosilane (F1) die allgemeine Formel (VII)

$$R^6{}_jSiR^1{}_{(4-j)} \qquad \text{(VII)}$$

auf, in der

**j** die Werte 1, 2, 3 oder 4 bedeutet und
$\mathbf{R^1}$ und $\mathbf{R^6}$ die vorstehenden Bedeutungen aufweisen.

Vorzugsweise weisen die Organopolysiloxane (F2) mindestens eine Siloxaneinheit der vorstehenden allgemeinen Formel (VI) auf, und alle anderen Siloxaneinheiten weisen die vorstehende allgemeine Formel (II) auf.

Vorzugsweise bedeutet **e** den Wert 1.

Vorzugsweise weisen die Organopolysiloxane (E2) und (F2) eine durchschnittliche Viskosität von 10 bis 100000 mPa·s, vorzugsweise 20 bis 10000 mPa·s, insbesondere 50 bis 1000 mPa·s bei 25°C auf.

Die Herstellung der Organopolysiloxane (A) erfolgt vorzugsweise bei 0°C bis 50°C, insbesondere bei 10°C bis 30°C.

Die Reaktionszeit, in der 99 Mol-% der Ausgangsverbindungen (E) und (F) zu Organopolysiloxanen (A) umgesetzt worden sind, beträgt meistens 1 Stunde bis 20 Tage, insbesondere 12 Stunden bis 3 Tage.

Vorzugsweise werden 0,1 bis 10 Gewichtsteile, insbesondere 0,5 bis 3 Gewichtsteile Lösungsvermittler (C) pro 100 Gewichtsteile Ausgangsverbindungen (E) und (F) zugegeben.

Die optisch klaren Zusammensetzungen werden vorzugsweise hergestellt, indem Ausgangverbindungen (E) und (F) in Gegenwart von
(C) 0,01 bis 20 Gewichtsteilen des vorstehend beschriebenen Lösungsvermittlers pro 100 Gewichtsteile Ausgangsverbindungen (E) und (F)
umgesetzt werden.

Bei dieser Ausführungsform können die Ausgangsverbindungen (E) und (F) mit Lösungsvermittler (C) lediglich vermischt werden, bei Lagerung und Transport entstehen dann die optisch klaren Zusammensetzungen. Es kann sogar die Reaktionsmischung aus Ausgangsverbindungen (E) und (F) mit Lösungsvermittler (C) direkt in Gebinde, wie Kanister, Fässer oder Tanks abgefüllt werden. Nach der erforderlichen Reaktionszeit bei der erforderlichen Reaktionstemperatur können die entstandenen optisch klaren Zusammensetzungen weiter verarbeitet werden. Die erforderliche Reaktionszeit kann auf dem Transportweg oder bei der Lagerhaltung eingehalten werden.

Danach können die Ausgangsverbindungen (E) und (F) noch in geringen Mengen in den optisch klaren Zusammensetzungen vorhanden sein. Solange die Umsetzung der Ausgangsverbindungen (E) und (F) noch nicht vollständig abgeschlossen ist, entstehen noch Alkanole mit 1 bis 4 Kohlenstoffatomen und/oder Wasser.

Bei der Kondensationsreaktion zwischen zwei Silanolgruppen entsteht ein Wassermolekül. Bei der Kondensationsreaktion zwischen einer Silanolgruppe und einer Alkoxygruppe entsteht ein Alkanolmolekül. Bei der Kondensationsreaktion zwischen zwei Alkoxygruppen wird ein Wassermolekül benötigt und es entstehen zwei Alkanolmoleküle.

Falls die eingesetzten Verbindungen (E) und (F) mehr Alkoxygruppen als Silanolgruppen aufweisen, muß Wasser zugegeben werden. Die erforderlichen Wassermengen sind so gering, daß sie aufgrund des eingesetzten Lösungsvermittlers (C) homogen mit Verbindungen (E) und (F) vermischbar sind. Ausreichend sind maximal 0,3, insbesondere 0,1 Gewichtsteile pro 100 Gewichtsteile Verbindungen (E) und (F).

Vorzugsweise weisen die Organopolysiloxane (E2) und (F2)Silanolgruppen auf, da die Reaktion zwischen Silanolgruppen und Alkoxygruppen besonders schnell abläuft.

Die optisch klaren Zusammensetzungen können auch hergestellt werden, indem

(A) Organopolysiloxan, das mindestens einen einwertigen SiC-gebundenen Rest mit primären, sekundären und/oder tertiären Aminogruppen aufweist, und
(B) 0,01 bis 1 Gewichtsteile pro 100 Gewichtsteile Organopolysiloxan (A) bestehend aus Alkanol mit 1 bis 4 Kohlenstoffatomen und gegebenenfalls Wasser mit

(C) 0,05 bis 5 Gewichtsteilen des vorstehend beschriebenen Lösungsvermittlers pro 100 Gewichtsteile Organopolysiloxan (A),

vermischt werden.

Dabei werden die trüben Mischungen aus den Komponenten (A) und (B) wieder klar.

Die als Lösungsvermittler (C) eingesetzten $C_1$- bis $C_{19}$-Carbonsäure-$C_1$- bis $C_{12}$-Alkylester und -Glykolester (Cl) weisen vorzugsweise die allgemeine Formel (VIII)

$$R^7-\overset{O}{\overset{\|}{C}}-[O(CH_2)_k]_lOR^8 \qquad (VIII)$$

auf, in der

**$R^7$** einen $C_1$- bis $C_{18}$-Alkylrest,
**$R^8$** ein Wasserstoffatom oder einen $C_1$- bis $C_6$-Alkylrest,
**k** die Werte 1, 2 oder 3 und
**l** die Werte 0 oder 1 bis 20 bedeuten.

Vorzugsweise ist **$R^7$** geradkettig und weist insbesondere 1 bis 19 Kohlenstoffatome auf. Vorzugsweise ist **$R^8$** ein geradkettiger Alkylrest und weist insbesondere 1 bis 6 Kohlenstoffatome auf. Vorzugsweise weist **k** den Wert 2 auf. Vorzugsweise weist **l** die Werte 0 oder 1 bis 5 auf.

Die $C_3$- bis $C_{20}$-Alkanole und $C_3$- bis $C_{20}$-Alkanol-$C_1$- bis $C_{12}$-Alkoxylate (C2) weisen vorzugsweise die allgemeine Formel (IX)

$$R^7\text{-}CH_2\text{-}CH_2\text{-}[O(CH_2)_k]_uOH \qquad (IX)$$

auf, in der

**u** die Werte 0 oder 1 bis 20 bedeuten und
**k** und **$R^7$** die vorstehenden Bedeutungen aufweisen.

Vorzugsweise weist **$R^7$** 4 bis 14 Kohlenstoffatome auf.

Die Glycosidreste aufweisenden Organosiliciumverbindungen (C3) sind vorzugsweise aus Einheiten der allgemeinen Formel (X)

$$R^1_vR^9_oSiO_{\frac{4-v-o}{2}} \qquad (X)$$

aufgebaut, worin

**v** 0, 1, 2 oder 3 ist,
**o** 0, 1, 2 oder 3 ist und
**$R^9$** einen Rest der allgemeinen Formel (XI)

$$Z\text{-}[(CH_2)_kO]_u\text{-}R^2\text{-} \qquad (XI)$$

bedeutet, worin

**Z** einen Glycosidrest bedeutet, der aus 1 bis 10, vorzugsweise 1 bis 4, insbesondere 1 bis 2, Monosaccharideinheiten aufgebaut ist, und

**$R^1$, $R^2$, k** und **u** die vorstehenden Bedeutungen aufweisen, mit der Maßgabe, daß die Summe aus **v** und **o** kleiner oder gleich 3 ist und Organosiliciumverbindung aus Einheiten der Formel (X) pro Molekül mindestens einen Rest **$R^9$** enthält.

Beispiele für Monosaccharide, aus denen die Glycosidreste **Z** aufgebaut sein können, sind Hexosen und Pentosen, wie Glucose, Fructose, Galactose, Mannose, Talose, Allose, Altrose, Idose, Arabinose, Xylose, Lyxose und Ribose, wobei Glucose besonders bevorzugt ist.

Beispiele für Alkylenreste sind Methylen-, Ethylen-, Propylen-, Butylen-, Pentylen-, Hexylen-, Heptylen-, Octylen-, Nonylen-, Decylen- und Octadecylenreste.

Bevorzugt handelt es sich bei Rest **$R^2$** um lineare Alkylenreste mit 2 bis 20 Kohlenstoffatomen, besonders bevorzugt um lineare Alkylenreste mit 2 bis 8 Kohlenstoffatomen, insbesondere um den n-Propylenrest.

Beispiele für Reste **$R^9$** sind $G-CH_2CH_2CH_2-$,
$G-(CH_2CH_2O)-CH_2CH_2CH_2-$,
$G-(CH_2CH_2O)_2-CH_2CH_2CH_2-$,

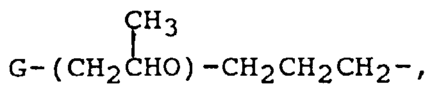

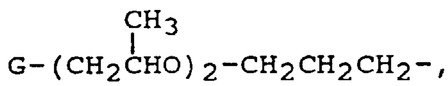

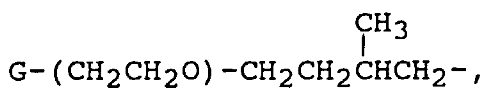

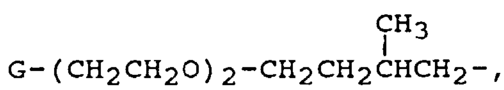

wobei G einen Glucosidrest ($C_6H_{11}O_6-$) bedeutet,
$G_2-CH_2CH_2CH_2-$,
$G_2-(CH_2CH_2O)-CH_2CH_2CH_2-$,
$G2-(CH_2CH_2O)_2-CH_2CH_2CH_2-$,

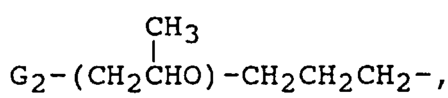

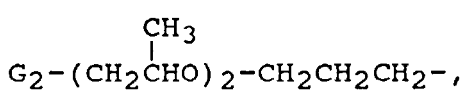

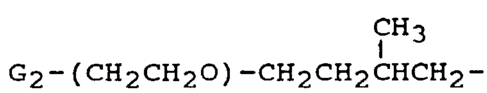

und

$$G_2-(CH_2CH_2O)_2-CH_2CH_2CH(CH_3)CH_2-,$$

wobei $G_2$ einen aus zwei Glucoseeinheiten aufgebauten Glycosidrest bedeutet.

Bevorzugt handelt es sich bei Rest $\mathbf{R^9}$ um $G-CH_2CH_2CH_2-$, $G-(CH_2CH_2O)-CH_2CH_2CH_2-$, $G_2-CH_2CH_2CH_2-$ und $G_2-(CH_2CH_2O)-CH_2CH_2CH_2-$, wobei $G-(CH_2CH_2O)-CH_2CH_2CH_2-$, und $G_2-(CH_2CH_2O)-CH_2CH_2CH_2-$ besonders bevorzugt sind und **G** einen Glucosidrest ($C_6H_{11}O_6-$) und $\mathbf{G_2}$ einen aus zwei Glucoseeinheiten aufgebauten Glycosidrest bedeutet.

Bevorzugt handelt es sich bei den Glycosidresten aufweisenden Organosiliciumverbindungen um solche der allgemeinen Formel (XII)

$$R^9{}_qR^1{}_{3-q}SiO-[(SiR^1R^9O)_r-(SiR^1{}_2O)_s]_t-SiR^1{}_{3-q}R^9{}_x \qquad \text{(XII)}$$

worin $\mathbf{R^1}$ und b die obengenannte Bedeutung haben,

**q** 0 oder 1 ist,
**r** 0 oder eine Zahl von 1 bis 200, bevorzugt 0 oder eine Zahl von 1 bis 100, besonders bevorzugt 0 oder eine Zahl von 1 bis 50, ist,
**s** 0 oder eine Zahl von 1 bis 1000, bevorzugt 0 oder eine Zahl von 1 bis 500, besonders bevorzugt 0 oder eine Zahl von 1 bis 100, ist und
**t** 0 oder eine Zahl von 1 bis 1200, bevorzugt 0 oder eine Zahl von 1 bis 600, besonders bevorzugt 0 oder eine Zahl von 1 bis 100, ist,

mit der Maßgabe, daß die Verbindung der allgemeinen Formel (XII) mindestens einen Rest $\mathbf{R^9}$ aufweist.

Ist in den Glycosidresten aufweisenden Organosiliciumverbindungen gemäß der allgemeinen Formel (XII) **r** durchschnittlich verschieden 0, bedeutet **q** bevorzugt 0.

Ist in den Glycosidresten aufweisenden Organosiliciumverbindungen gemäß der allgemeinen Formel (XII) **x** durchschnittlich verschieden 0, ist **r** bevorzugt 0.

Obwohl durch die allgemeine Formel (XII) nicht dargestellt, können bis zu 10 Molprozent der Diorganosiloxaneinheiten durch andere Siloxaneinheiten, wie beispielsweise $R^1SiO_{3/2}-$, $R^6SiO_{3/2}-$ und/oder $SiO_{4/2}$-Einheiten, ersetzt sein, wobei $\mathbf{R^1}$ und $\mathbf{R^6}$ die vorstehende Bedeutung haben.

Die optisch klaren Zusammensetzungen können noch die Kondensations- sowie die Äquilibrierungsreaktion fördernde basische Katalysatoren, wie Alkalihydroxide, insbesondere Kalium- und Cäsiumhydroxid, Alkalialkoholate, quaternäre Ammoniumhydroxide, wie Tetramethylammoniumhydroxid, Benzyltrimethylammoniumhydroxid, Benzyltriethylammoniumhydroxid, Benzyltrimethylammoniumbutylat, β-Hydroxyethyltrimethylammonium-2-ethylhexoat, quaternäre Phosphoniumhydroxide, wie Tetra-n-butylphosphoniumhydroxid und Tri-n-butyl-3-[tris-(trimethylsiloxy)silyl]-n-propylphosphoniumhydroxid, Alkalisiloxanolate und Ammoniumorganosiloxanolate, wie Benzyltrimethylammoniumethylsiloxanolat enthalten.

Die Kondensations- sowie die Äquilibrierungsreaktion fördernden basischen Katalysatoren können bereits bei der Herstellung der optisch klaren Zusammensetzungen mit Verbindungen (E) und (F) vermischt werden. Vorzugsweise sind höchstens 5, insbesondere höchstens 2 Gewichtsteile an basischen Katalysatoren pro 100 Gewichtsteile Organopolysiloxan (A) oder Verbindungen (E) und (F) anwesend.

Die optisch klaren Zusammensetzungen können für bestimmte Zwecke, beispielsweise für den Einsatz als Textilbehandlungsmittel, neben den vorstehenden Bestandteilen Zusatzstoffe enthalten. Geeignete Zusatzstoffe sind beispielsweise Biozide, wie Fungizide, Bakterizide, Algicide und Mikrobicide, Verdickungsmittel, Frostschutzmittel, Antistatika, Farbstoffe, Flammschutzmittel und organische Weichmacher.

In den nachfolgenden Beispielen sind, falls jeweils nicht anders angegeben,

a) alle Mengenangaben auf das Gewicht bezogen;

b) alle Drücke 0,10 MPa (abs.);

c) alle Temperaturen 20° C .

Beispiele

**Beispiel 1**

Jeweils 98 Gewichtsteile eines Polydimethylsiloxanöls mit endständigen Hydroxylgruppen mit einer Viskosität von 70 mPa·s bei 25°C wurden mit 2 Gewichtsteilen eines Silans der nachstehenden allgemeinen Formel (XIII) vermischt und bei 20°C aufbewahrt. Nach der nachstehend angegebenen Zeit stellte sich eine Trübung ein.

$$CH_3(CH_3O)_2SiY \qquad (XIII)$$

Silan 1: Y = $-(CH_2)_3-NH(CH_2)_3CH_3$; Trübung nach 17 Tagen.
Silan 2: Y = $-(CH_2)_3-NHCH_3$; Trübung nach 10 Tagen.
Silan 3: Y = $-(CH_2)_3-NH-(CH_2)_3-OCH_3$; Trübung nach 24 Tagen.
Silan 4: Y = $-(CH_2)_3-NH-(CH_2)_2-N(CH_3)_2$; Trübung nach 20 Tagen.
Silan 5: Y = $-(CH_2)_3$-NH(Cyclohexyl); Trübung nach 20 Tagen.
Silan 6: Y = $-(CH_2)_3-NH-(CH_2)_2-NH_2$; Trübung nach 21 Tagen.

2 Tage, nachdem sich die Trübung eingestellt hatte, wurden die Gemische mit 1 Gewichtsteil Iso-Tridecyl-diethylenglykolether vermischt. Die Gemische wurden nach wenigen Minuten optisch klar.

**Beispiel 2**

Die in Beispiel 1 hergestellten Gemische wurden 2 Tage, nachdem sich die Trübung eingestellt hatte, mit 10 Gewichtsteilen Iso-Tridecanol vermischt. Die Gemische wurden nach wenigen Minuten optisch klar.

**Beispiel 3**

Die in Beispiel 1 hergestellten Gemische wurden 2 Tage, nachdem sich die Trübung eingestellt hatte, mit 10 Gewichtsteilen Iso-Propylpalmitat vermischt. Die Gemische wurden nach wenigen Minuten optisch klar.

**Beispiel 4**

Die in Beispiel 1 hergestellten Gemische wurden 2 Tage, nachdem sich die Trübung eingestellt hatte, mit 10 Gewichtsteilen Ethylglykolacetat vermischt. Die Gemische wurden nach wenigen Minuten optisch klar.

**Beispiel 5**

Jeweils 98 Gewichtsteile eines Polydimethylsiloxanöls mit endständigen Hydroxylgruppen mit einer Viskosität von 70 mPa·s bei 25°C wurden mit 2 Gewichtsteilen des in Beispiel 1 aufgeführten Silans 6 und mit den in den vorstehenden Beispielen 1 bis 4 angegebenen Lösungsvermittlern in den dort angegebenen Mengen vermischt und bei 20°C 40 Tage aufbewahrt. Die Gemische blieben optisch klar.

**Patentansprüche**

**1.** Optisch klare Zusammensetzungen enthaltend

(A) Organopolysiloxan, das mindestens einen einwertigen SiC-gebundenen Rest mit primären, sekundären und/oder tertiären Aminogruppen aufweist,
(B) 0,01 bis 1 Gewichtsteile pro 100 Gewichtsteile Organopolysiloxan (A) Verbindungen, die ausgewählt werden aus Wasser, Methanol und Ethanol und
(C) 0,05 bis 20 Gewichtsteile Lösungsvermittler pro 100 Gewichtsteile Organopolysiloxan (A), der ausgewählt wird aus

(C1) $C_1$- bis $C_{19}$-Carbonsäure-$C_1$- bis $C_{12}$-Alkylestern und -Glykolestern,
(C2) $C_3$- bis $C_{20}$-Alkanolen und $C_3$- bis $C_{20}$-Alkanol-$C_1$-bis $C_{12}$-Alkoxylaten und

(C3) Glycosidreste aufweisenden Organosiliciumverbindungen.

2. Optisch klare Zusammensetzungen nach Anspruch 1, bei denen das Organopolysiloxan (A) mindestens eine Siloxaneinheit der allgemeinen Formel (I)

$$R^1_aQ_bSiO_{\frac{(4-a-b)}{2}} \qquad (I)$$

und alle anderen Siloxaneinheiten die allgemeine Formel (II)

$$R^1_cSiO_{\frac{(4-c)}{2}}, \qquad (II)$$

aufweisen, wobei

**$R^1$** gleiche oder verschiedene, einwertige, gegebenenfalls Fluor-, Chlor- oder Brom- substituierte $C_1$- bis $C_{18}$-Kohlenwasserstoffreste, Wasserstoffatome, $C_1$- bis $C_{12}$-Alkoxy- oder Hydroxyreste oder Alkylglykolreste bedeutet,
**Q** eine Gruppe der allgemeinen Formel (III)

$$-R^2-[NR^3(CH_2)_m]_dN(R^3)_2 \qquad (III)$$

bedeutet, wobei

**$R^2$** einen zweiwertigen $C_1$- bis $C_{18}$-Kohlenwasserstoffrest bedeutet,
**$R^3$** ein Wasserstoffatom oder einen gegebenenfalls Fluor-, Chlor- oder Brom- oder $C_1$- bis $C_5$-Alkoxysubstituierten $C_1$- bis $C_{18}$-Kohlenwasserstoffrest bedeutet,
**a** die Werte 0, 1 oder 2,
**b** die Werte 1, 2 oder 3,
**c** die Werte 0, 1, 2 oder 3,
**d** die Werte 0, 1, 2, 3 oder 4 und
**m** die Werte 2, 3, 4, 5 oder 6 aufweisen und die Summe aus a und b maximal 4 beträgt.

3. Optisch klare Zusammensetzungen nach Anspruch 1 oder 2, bei denen die Amingehalte 0,01 bis 2 mequiv/g betragen, gemessen als Verbrauch an 1n Salzsäure in ml/g Organopolysiloxan (A) bei der Titration bis zum Neutralpunkt.

4. Verfahren zur Herstellung der optisch klaren Zusammensetzungen nach einem der Ansprüche 1 bis 3, bei dem als Ausgangverbindungen

(E) Verbindungen, die ausgewählt werden aus

(E1) Organosilanen welche mindestens einen einwertigen SiC- gebundenen Rest mit primären, sekundären und/oder tertiären Aminogruppen und mindestens eine $C_1$- bis $C_4$-Alkoxygruppe aufweisen und
(E2) Organopolysiloxanen welche mindestens einen einwertigen SiC- gebundenen Rest mit primären, sekundären und/oder tertiären Aminogruppen und mindestens eine $C_1$-bis $C_4$-Alkoxy- und/oder Silanolgruppe aufweisen und

(F) Verbindungen, die ausgewählt werden aus

(F1) Organosilanen welche mindestens eine $C_1$- bis $C_4$-Alkoxygruppe aufweisen und
(F2) Organopolysiloxanen welche mindestens eine $C_1$- bis $C_4$-Alkoxy- und/oder Silanolgruppe aufweisen,

in Gegenwart von
(C) 0,01 bis 20 Gewichtsteilen des in Anspruch 1 beschriebenen Lösungsvermittlers pro 100 Gewichtsteile Ausgangverbindungen (E) und (F) umgesetzt werden.

**5.** Verfahren zur Herstellung der optisch klaren Zusammensetzungen nach einem der Ansprüche 1 bis 3, bei dem

(A) Organopolysiloxan, das mindestens einen einwertigen SiC-gebundenen Rest mit primären, sekundären und/oder tertiären Aminogruppen aufweist, und
(B) 0,01 bis 1 Gewichtsteile pro 100 Gewichtsteile Organopolysiloxan (A) bestehend aus Alkanol mit 1 bis 4 Kohlenstoffatomen und gegebenenfalls Wasser mit
(C) 0,05 bis 5 Gewichtsteilen des vorstehend beschriebenen Lösungsvermittlers pro 100 Gewichtsteile Organopolysiloxan (A),

vermischt werden.

**6.** Optisch klare Zusammensetzungen nach einem der Ansprüche 1 bis 3, wobei die Lösungsvermittler (C) $C_1$- bis $C_{19}$-Carbonsäure-$C_1$- bis $C_{12}$-Alkylester und -Glykolester (C1) die allgemeine Formel (VIII)

$$R^7-C(=O)-[O(CH_2)_k]_lOR^8 \quad (VIII)$$

aufweisen, in der

**$R^7$** einen $C_1$- bis $C_{18}$-Alkylrest,
**$R^8$** ein Wasserstoffatom oder einen $C_1$- bis $C_6$-Alkylrest,
**k** die Werte 1, 2 oder 3 und
**l** die Werte 0 oder 1 bis 20 bedeuten.

**7.** Optisch klare Zusammensetzungen nach einem der Ansprüche 1 bis 3, wobei die $C_3$- bis $C_{20}$-Alkanole und $C_3$- bis $C_{20}$-Alkanol-$C_1$- bis $C_{12}$-Alkoxylate (C2) die allgemeine Formel (IX)

$$R^7-CH_2-CH_2-[O(CH_2)_k]_uOH \quad (IX)$$

aufweisen, in der

**u** die Werte 0 oder 1 bis 20 bedeuten und
**k** und **$R^7$** die in Anspruch 6 aufgeführten Bedeutungen aufweisen.

**8.** Optisch klare Zusammensetzungen nach einem der Ansprüche 1 bis 3, wobei die Glycosidreste aufweisenden Organosiliciumverbindungen (C3) aus Einheiten der allgemeinen Formel (X)

$$R^1_vR^9_oSiO_{\frac{4-v-o}{2}} \quad (X)$$

aufgebaut sind, worin

**v** 0, 1, 2 oder 3 ist,
**o** 0, 1, 2 oder 3 ist und
**$R^9$** einen Rest der allgemeinen Formel (XI)

$$Z-[(CH_2)_kO]_u-R^2- \quad (XI)$$

bedeutet, worin

**Z** einen Glycosidrest bedeutet, der aus 1 bis 10 Monosaccharideinheiten aufgebaut ist, und
**$R^1$, $R^2$, k** und **u** die in den Ansprüchen 2, 6 und 7 angegebenen Bedeutungen aufweisen,
mit der Maßgabe, daß die Summe aus **v** und **o** kleiner oder gleich 3 ist und Organosiliciumverbindung aus Einheiten der Formel (X) pro Molekül mindestens einen Rest **$R^9$** enthält.

**9.** Verfahren nach Anspruch 4 oder 5, wobei die Lösungsvermittler (C) $C_1$- bis $C_{19}$-Carbonsäure-$C_1$- bis $C_{12}$-Alkylester und -Glykolester (C1) die allgemeine Formel (VIII)

$$R^7-\overset{\overset{\displaystyle O}{\|}}{C}-[O(CH_2)_k]_lOR^8 \qquad (VIII)$$

aufweisen, in der

**$R^7$** einen $C_1$- bis $C_{18}$-Alkylrest,
**$R^8$** ein Wasserstoffatom oder einen $C_1$- bis $C_6$-Alkylrest,
**k** die Werte 1, 2 oder 3 und
**l** die Werte 0 oder 1 bis 20 bedeuten.

**10.** Verfahren nach Anspruch 4 oder 5, wobei die $C_3$- bis $C_{20}$-Alkanole und $C_3$- bis $C_{20}$-Alkanol-$C_1$- bis $C_{12}$-Alkoxylate (C2) die allgemeine Formel (IX)

$$R^7\text{-}CH_2\text{-}CH_2\text{-}[O(CH_2)_k]_uOH \qquad (IX)$$

aufweisen, in der

**u** die Werte 0 oder 1 bis 20 bedeuten und
**k** und **$R^7$** die in Anspruch 6 aufgeführten Bedeutungen aufweisen.

**11.** Verfahren nach Anspruch 4 oder 5, wobei die Glycosidreste aufweisenden Organosiliciumverbindungen (C3) aus Einheiten der allgemeinen Formel (X)

$$R^1_vR^9_oSiO_{\frac{4-v-o}{2}} \qquad (X)$$

aufgebaut sind, worin

**v** 0, 1, 2 oder 3 ist,
**o** 0, 1, 2 oder 3 ist und
**$R^9$** einen Rest der allgemeinen Formel (XI)

$$Z\text{-}[(CH_2)_kO]_u\text{-}R^2\text{-} \qquad (XI)$$

bedeutet, worin

**Z** einen Glycosidrest bedeutet, der aus 1 bis 10 Monosaccharideinheiten aufgebaut ist, und
**$R^1$, $R^2$, k** und **u** die in den Ansprüchen 2, 6 und 7 angegebenen Bedeutungen aufweisen,
mit der Maßgabe, daß die Summe aus **v** und **o** kleiner oder gleich 3 ist und Organosiliciumverbindung aus Einheiten der Formel (X) pro Molekül mindestens einen Rest **$R^9$** enthält.

**Claims**

1. Optically clear composition comprising

(A) an organopolysiloxane which contains at least one monovalent SiC-bonded radical with primary, secondary and/or tertiary amino groups,
(B) 0.01 to 1 part by weight per 100 parts by weight of organopolysiloxane (A) of compounds which are chosen from water, methanol and ethanol and
(C) 0.05 to 20 parts by weight of a solubilizing agent per 100 parts by weight of organopolysiloxane (A), which is chosen from

(C1) $C_1$- to $C_{19}$-carboxylic acid $C_1$- to $C_{12}$-alkyl esters and -glycol esters,
(C2) $C_3$- to $C_{20}$-alkanols and $C_3$- to $C_{20}$-alkanol-$C_1$- to $C_{12}$-alkoxylates and
(C3) organosilicon compounds containing glycoside radicals.

2. Optically clear composition according to Claim 1, in which the organopolysiloxane (A) contains at least one siloxane unit of the general formula (I)

$$R^1_aQ_bSiO_{\frac{(4-a-b)}{2}} \qquad (I)$$

and all the other siloxane units have the general formula (II)

$$R^1_cSiO_{\frac{(4-c)}{2}}, \qquad (II)$$

in which

$R^1$ is identical or different monovalent optionally fluorine-, chlorine- or bromine-substituted $C_1$- to $C_{18}$-hydrocarbon radicals, hydrogen atoms, $C_1$- to $C_{12}$-alkoxy or hydroxyl radicals or alkylglycol radicals,
Q is a group of the general formula (III)

$$-R^2-[NR^3(CH_2)_m]_dN(R^3)_2 \qquad (III)$$

in which

$R^2$ is a divalent $C_1$- to $C_{18}$-hydrocarbon radical,
$R^3$ is a hydrogen atom or an optionally fluorine-, chlorine-or bromine- or $C_1$- to $C_5$-alkoxy-substituted $C_1$- to $C_{18}$-hydrocarbon radical,
a has the values 0, 1 or 2,
b has the values 1, 2 or 3,
c has the values 0, 1, 2 or 3,
d has the values 0, 1, 2, 3 or 4 and
m has the values 2, 3, 4, 5 or 6 and the sum of a and b is not more than 4.

3. Optically clear composition according to Claim 1 or 2, in which the amine contents are 0.01 to 2 mequivalents/g, measured as the consumption of 1 N hydrochloric acid in ml/g of organopolysiloxane (A) during titration to the neutral point.

4. Process for the preparation of the optically clear composition according to one of Claims 1 to 3, in which

(E) compounds which are chosen from

(E1) organosilanes which contain at least one monovalent SiC-bonded radical with primary, secondary and/or tertiary amino groups and at least one $C_1$- to $C_4$-alkoxy group and

(E2) organopolysiloxanes which contain at least one monovalent SiC-bonded radical with primary, secondary and/or tertiary amino groups and at least one $C_1$- to $C_4$-alkoxy and/or silanol group and

(F) compounds which are chosen from

(F1) organosilanes which contain at least one $C_1$- to $C_4$-alkoxy group and
(F2) organopolysiloxanes which contain at least one $C_1$- to $C_4$-alkoxy group and/or silanol group,

are reacted as starting compounds in the presence of
(C) 0.01 to 20 parts by weight of the solubilizing agent described in Claim 1 per 100 parts by weight of the starting compounds (E) and (F).

**5.** Process for the preparation of the optically clear composition according to one of Claims 1 to 3, in which

(A) an organopolysiloxane which contains at least one monovalent SiC-bonded radical with primary, secondary and/or tertiary amino groups and
(B) 0.01 to 1 part by weight per 100 parts by weight of organopolysiloxane (A) comprising an alkanol having 1 to 4 carbon atoms and, if appropriate, water are mixed with
(C) 0.05 to 5 parts by weight of the solubilizing agent described above per 100 parts by weight of organopolysiloxane (A).

**6.** Optically clear composition according to one of Claims 1 to 3, wherein the solubilizing agent (C) $C_1$- to $C_{19}$-carboxylic acid $C_1$- to $C_{12}$-alkyl ester or -glycol ester (C1) has the general formula (VIII)

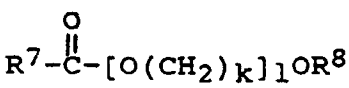

(VIII)

in which

$R^7$ is a $C_1$- to $C_{18}$-alkyl radical,
$R^8$ is a hydrogen atom or a $C_1$- to $C_6$-alkyl radical,
k has the values 1, 2 or 3 and
l has the values 0 or 1 to 20.

**7.** optically clear composition according to one of Claims 1 to 3, wherein the $C_3$- to $C_{20}$-alkanol or $C_3$- to $C_{20}$-alkanol-$C_1$- to $C_2$-alkoxylate (C2) has the general formula (IX)

$$R^7\text{-}CH_2\text{-}CH_2\text{-}[O(CH_2)_k]_uOH \qquad (IX)$$

in which

u has the values 0 or 1 to 20 and
k and $R^7$ have the meanings given in Claim 6.

**8.** Optically clear composition according to one of Claims 1 to 3, wherein the organosilicon compound (C3) containing glycoside radicals is built up from units of the general formula (X)

$$R^1_vR^9_oSiO_{\frac{4-v-o}{2}} \qquad (X)$$

in which

v is 0, 1, 2 or 3,
o is 0, 1, 2 or 3 and

$R^9$ is a radical of the general formula (XI)

$$Z\text{-}[(CH_2)_kO]_u\text{-}R^2\text{-} \quad (XI)$$

in which

Z is a glycoside radical which is built up from 1 to 10 monosaccharide units and
$R^1$, $R^2$, k and u have the meanings given in Claims 2, 6 and 7,

with the proviso that the sum of v and o is less than or equal to 3 and the organosilicon compound of units of the formula (X) contains at least one radical $R^9$ per molecule.

**9.** Process according to Claim 4 or 5, in which the solubilizing agents (C) $C_1$- to $C_{19}$-carboxylic acid $C_1$- to $C_{12}$-alkyl esters and -glycol esters ($C_1$) have the general formula (VIII)

$$R^7\text{-}C(=O)\text{-}[O(CH_2)_k]_lOR^8 \quad (VIII)$$

in which

$R^7$ is a $C_1$- to $C_{18}$-alkyl radical,
$R^8$ is a hydrogen atom or a $C_1$- to $C_6$-alkyl radical,
k has the values 1, 2 or 3 and
l has the values 0 or 1 to 20.

**10.** Process accoding to Claim 4 or 5, in which the $C_3$- to $C_{20}$-alkanols and $C_3$- to $C_{20}$-alkanol $C_1$- to $C_{12}$-alkoxylates (C2) have the general formula (IX)

$$R^7\text{-}CH_2\text{-}CH_2\text{-}[O(CH_2)_k]_uOH \quad (IX)$$

in which

u has the values 0 or 1 to 20 and
k and $R^7$ have the meanings given in Claim 6.

**11.** Process according to Claim 4 or 5, in which the organosilicon compounds (C3) containing glycoside radicals are built up from units of the general formula (X)

$$R^1_vR^9_oSiO_{\frac{4-v-o}{2}} \quad (X)$$

in which

v is 0, 1, 2 or 3,
o is 0, 1, 2 or 3 and
$R^9$ is a radical of the general formula (XI)

$$Z\text{-}[(CH_2)_kO]_u\text{-}R^2\text{-} \quad (XI)$$

wherein

Z is a glycoside radical which is built up from 1 to 10 monosaccharide units and,
$R^1$, $R^2$, k and u have the meanings given in Claims 2, 6 and 7,

with the proviso that the sum of v and o is less than or equal to 3 and the organosilicon compound of units of the formula (X) contains at least one radical $R^9$ per molecule.

## Revendications

**1.** Compositions optiquement claires contenant

(A) un organopolysiloxane, qui présente au moins un résidu monovalent lié SiC, ayant des groupements amino primaires, secondaires et/ou tertiaires,

(B) de 0,01 à 1 part en poids pour 100 parts en poids d'organopolysiloxane (A) de composés, qui sont choisis parmi l'eau, le méthanol et l'éthanol et

(C) de 0,05 à 20 parts en poids d'un agent de solubilisation pour 100 parts en poids d'organopolysiloxane (A), qui est choisi parmi

(C1) les esters alkyles et les esters glycoliques en $C_1$ à $C_{12}$ d'acides carboxyliques en $C_1$ à $C_{19}$ et
(C2) les alcanols en $C_3$ à $C_{20}$ et les alcoxylates en $C_1$ à $C_{12}$ d'alcanols en $C_3$ à $C_{20}$ et
(C3) les composés d'organosilicium présentant des résidus glucosidiques.

**2.** Compositions optiquement claires selon la revendication 1, pour lesquelles l'organopolysiloxane (A) présente au moins une unité de siloxane de formule générale (I)

$$R^1_aQ_bSiO_{\frac{(4-a-b)}{2}} \quad (I)$$

et toutes les autres unités de siloxane présentent la formule générale (II)

$$R^1_cSiO_{\frac{(4-c)}{2}} \quad (II)$$

$R^1$ désignant des résidus d'hydrocarbures en $C_1$ à $C_{18}$ identiques ou différents, monovalents, le cas échéant substitués par le fluor, le chlore ou le brome, des atomes d'hydrogène, des résidus alkoxy en $C_1$ à $C_{12}$ ou des résidus hydroxy ou des résidus alkylglycoliques,
Q désignant un groupement de formule générale (III)

$$-R^2-[NR^3(CH_2)_m]_dN(R^3)_2 \quad (III)$$

$R^2$ désignant un résidu d'hydrocarbure divalent en $C_1$ à $C_{18}$,
$R^3$ désignant un atome d'hydrogène ou un résidu d'hydrocarbure en $C_1$ à $C_{18}$, le cas échéant substitué par le fluor, le chlore ou le brome, ou alcoxy-substitué en $C_1$ à $C_5$
a présentant les valeurs 0, 1 ou 2,
b les valeurs 1, 2 ou 3,
c les valeurs 0, 1, 2 ou 3,
d les valeurs 0, 1, 2, 3 ou 4 et
m les valeurs 2, 3, 4, 5 ou 6 et la somme de a et de b faisant au maximum 4.

**3.** Compositions optiquement claires selon la revendication 1 ou 2, pour lesquelles les teneurs en amine sont de 0,01 à 2 milliéquivalents/g, mesurées en tant que consommation en acide chlorhydrique 1N en ml/g d'organopolysiloxane (A) lors de la titration jusqu'au point neutre.

**4.** Procédé de fabrication des compositions optiquement claires selon l'une quelconque des revendications 1 à 3, lors duquel on fait réagir en tant que composés de départ

(E) des composés qui sont choisis parmi

(E1) des organosilanes qui présentent au moins un résidu monovalent lié SiC, ayant des groupements amino primaires, secondaires et/ou tertiaires et au moins un groupement alkoxy en $C_1$ à $C_4$ et
(E2) des organopolysiloxanes qui présentent au moins un résidu monovalent lié SiC, ayant des groupements amino primaires, secondaires et/ou tertiaires et au moins un groupement alkoxy en $C_1$ à $C_4$ et/ou un groupement silanol et

(F) des composés qui sont choisis parmi

(F1) des organosilanes qui présentent au moins un groupement alkoxy en $C_1$ à $C_4$ et
(F2) des organopolysiloxanes qui présentent au moins un groupement alkoxy en $C_1$ à $C_4$, et/ou un groupement silanol,

en présence
(C) de 0,01 à 20 parts en poids de l'agent de solubilisation décrit dans la revendication 1 pour 100 parts en poids des composés de départ (E) et (F).

**5.** Procédé de fabrication des compositions optiquement claires selon l'une quelconque des revendications 1 à 3, lors duquel on mélange

(A) un organopolysiloxane, qui présente au moins un résidu monovalent lié SiC, ayant des groupements amino primaires, secondaires et/ou tertiaires, et
(B) de 0,01 à 1 part en poids pour 100 parts en poids d'organopolysiloxane (A) se composant d'un alcanol ayant de 1 à 4 atomes de carbone et, le cas échéant, d'eau avec
(C) de 0,05 à 5 parts en poids de l'agent de solubilisation décrit antérieurement pour 100 parts en poids d'organopolysiloxane (A).

**6.** Compositions optiquement claires selon l'une quelconque des revendications 1 à 3, les agents de solubilisation (C) esters alkyles et esters glycoliques en $C_1$ à $C_{12}$ d'acides carboxyliques en $C_1$ à $C_{19}$ (C1) présentant la formule générale (VIII)

$$R^7-\overset{O}{\overset{\|}{C}}-[O(CH_2)_k]_lOR^8 \qquad (VIII)$$

dans laquelle

$R^7$ désigne un résidu alkyle en $C_1$ à $C_{18}$,
$R^8$ désigne un atome d'hydrogène ou un résidu alkyle en $C_1$ à $C_6$,
k désigne les valeurs 1, 2 ou 3 et
l désigne les valeurs 0 ou 1 à 20.

**7.** Compositions optiquement claires selon l'une quelconque des revendications 1 à 3, les alcanols en $C_3$ à $C_{20}$ et les alkoxylates en $C_1$ à $C_{12}$ d'alcanols en $C_3$ à $C_{20}$ (C2) présentant la formule générale (IX)

$$R^7\text{-}CH_2\text{-}CH_2\text{-}[O(CH_2)_k]_uOH \qquad (IX)$$

dans laquelle

u désigne les valeurs 0 ou 1 à 20 et
k et $R^7$ présentent les significations indiquées dans la revendication 6.

**8.** Compositions optiquement claires selon l'une quelconque des revendications 1 à 3, les composés d'organosilicium (C3) présentant des résidus glucosidiques étant constitués d'unités de formule générale (X)

$$R^1_vR^9_oSiO_{\frac{4-v-o}{2}} \qquad (X)$$

où

v est 0, 1, 2 ou 3,
o est 0, 1, 2 ou 3 et
$R^9$ désigne un résidu de formule générale (XI)

$$Z\text{-}[(CH_2)_kO]_u\text{-}R^2\text{-} \qquad (XI)$$

où

Z désigne un résidu glucosidique qui est constitué de 1 à 10 unités de monosaccharide, et
$R^1$, $R^2$, k et u présentent les significations indiquées dans les revendications 2, 6 et 7,

sous réserve que la somme de v et de o soit inférieure ou égale à 3 et que le composé d'organosilicium d'unités de formule (X) contienne par molécule au moins un résidu $R^9$.

**9.** Procédé selon la revendication 4 ou 5, dans lequel les agents de solubilisation (C) esters alkyles et esters glycoliques en $C_1$ à $C_{12}$ d'acides carboxyliques en $C_1$ à $C_{19}$ (C1) présentent la formule générale (VIII)

$$R^7\text{-}\overset{O}{\overset{\|}{C}}\text{-}[O(CH_2)_k]_lOR^8 \qquad (VIII)$$

dans laquelle

$R^7$ désigne un résidu alkyle en $C_1$ à $C_{18}$,
$R^8$ désigne un atome d'hydrogène on un résidu alkyle en $C_1$ à $C_6$,
k désigne les valeurs 1, 2 ou 3 et
l désigne les valeurs 0 ou 1 à 20.

**10.** Procédé selon la revendication 4 ou 5, dans lequel les alcanols en $C_3$ à $C_{20}$ et les alcoxylates en $C_1$ à $C_{12}$ d'alcanols en $C_3$ à $C_{20}$ (C2) présentent la formule générale (IX)

$$R^7\text{-}CH_2\text{-}CH_2\text{-}[O(CH_2)_k]_uOH \qquad (IX)$$

dans laquelle

u désigne les valeurs 0 ou 1 à 20 et
k et $R^7$ présentent les significations indiquées dans la revendication 6.

**11.** Procédé selon la revendication 4 ou 5, dans lequel les composés d'organosilicium (C3) présentant des résidus glucosidiques sont constitués d'unités de formule générale (X)

$$R^1_vR^9_oSiO_{\frac{4-v-o}{2}} \qquad (X)$$

où

- v est 0, 1, 2 ou 3,
- o est 0, 1, 2 ou 3 et
- $R^9$ désigne un résidu de formule générale (XI)

$$Z\text{-}[(CH_2)_kO]_u\text{-}R^2\text{-} \qquad (XI)$$

où

- Z désigne un résidu glucosidique qui est constitué de 1 à 10 unités de monosaccharide, et
- $R^1$, $R^2$, k et u présentent les significations indiquées dans les revendications 2, 6, et 7,

sous réserve que la somme de v et de o soit inférieure ou égale à 3 et que le composé d'organosilicium d'unités de formule (X) contienne par molécule au moins un résidu $R^9$.